(19) Europäisches Patentamt
European Patent Office
Office européen des brevets

(11) **EP 1 668 431 B1**

(12) **EUROPÄISCHE PATENTSCHRIFT**

(45) Veröffentlichungstag und Bekanntmachung des Hinweises auf die Patenterteilung:
**27.04.2011 Patentblatt 2011/17**

(21) Anmeldenummer: **04787219.7**

(22) Anmeldetag: **27.09.2004**

(51) Int Cl.:
*G05B 13/04* (2006.01)

(86) Internationale Anmeldenummer:
**PCT/EP2004/052319**

(87) Internationale Veröffentlichungsnummer:
**WO 2005/033809 (14.04.2005 Gazette 2005/15)**

(54) **VERFAHREN, COMPUTERPROGRAMM MIT PROGRAMMCODE-MITTELN UND COMPUTERPROGRAMM-PRODUKT ZUR ANALYSE VON EINFLUSSGRÖSSEN AUF EINEN BRENNVORGANG IN EINER BRENNKAMMER UNTER VERWENDUNG EINES TRAINIERBAREN, STATISTISCHEN MODELLS**

METHOD, COMPUTER PROGRAM WITH PROGRAM CODE MEANS AND COMPUTER PROGRAM PRODUCT FOR ANALYZING VARIABLES INFLUENCING A COMBUSTION PROCESS IN A COMBUSTION CHAMBER, USING A TRAINABLE STATISTICAL MODEL

PROCEDE, PROGRAMME INFORMATIQUE COMPRENANT DES MOYENS DE CODE DE PROGRAMME ET PROGICIEL INFORMATIQUE SERVANT A ANALYSER DES GRANDEURS INFLUANT SUR UN PROCESSUS DE COMBUSTION DANS UNE CHAMBRE DE COMBUSTION AU MOYEN D'UN MODELE STATISTIQUE APTE A L'APPRENTISSAGE

(84) Benannte Vertragsstaaten:
**AT BE BG CH CY CZ DE DK EE ES FI FR GB GR HU IE IT LI LU MC NL PL PT RO SE SI SK TR**

(30) Priorität: **30.09.2003 DE 10345440**

(43) Veröffentlichungstag der Anmeldung:
**14.06.2006 Patentblatt 2006/24**

(73) Patentinhaber: **SIEMENS AKTIENGESELLSCHAFT**
**80333 München (DE)**

(72) Erfinder:
• **HOFMANN, Reimar**
**80796 München (DE)**

• **STERZING, Volkmar**
**85579 Neubiberg (DE)**

(56) Entgegenhaltungen:
**US-A- 5 857 321**

• **EAKLE DOUGLAS L ET AL: "Optimizing combustion to reduce NOx and improve boiler efficiency using constrained empirical optimization based on Bayesian models" PROCEEDINGS OF THE 1998 SPRING TECHNICAL CONFERENCE OF THE ASME INTERNAL COMBUSTION ENGINE DIVISION FORT LAUDERDALE US, Bd. 30, Nr. 1, 1997, Seiten 87-92, XP009042888 FAIRFIELD**

# EP 1 668 431 B1

## Beschreibung

Die Erfindung betrifft eine Analyse von Einflussgrößen auf einen Brennvorgang in einer Brennkammer.

Aus [1] ist eine Analyse von Einflussgrößen auf einen Brennvorgang in einer Brennkammer bekannt.

Bei dieser Analyse werden lineare Methoden, wie eine Regressionsanalyse, verwendet, um Abhängigkeiten zwischen den Einflussgrößen und deren Einflussnahme auf den Brennvorgang zu untersuchen.

Da allerdings ein in einer Brennkammer ablaufender Brennvorgang ein komplexer, nicht linearen Abhängigkeiten von Einflussfaktoren gehorchender Prozess ist, liefern solche "linearen" Analyseverfahren, wie aus [1], keine zuverlässigen und hinreichend genauen Ergebnisse hinsichtlich des Einflusses von Einflussgrößen auf den Brennvorgang.

Aus [2] ist eine weiterführende Analyse eines Brennvorgangs, in diesem Fall eines Brennvorgangs in einer Brennkammer einer Gasturbine, einer sogenannte Ringbrennkammer-Gasturbine V84. 3A, bekannt.

Ferner ist aus [2] ein Auftreten von Schwingungen bzw. Druckschwankungen bei einem Brennvorgang in einer Brennkammer einer Gasturbine, in diesem Fall der Ringbrennkammer-Gasturbine V84.3A, und von durch resultierende Vibrationen bedingten Schädigungen der Brennkammer bekannt.

Es ist in [2] beschrieben, dass diese Schwingungen bzw. Vibrationen, ein sogenanntes Brummen bzw. Brennkammerbrummen, entstehen durch eine Mitkopplung von gleichzeitig ablaufenden Brennvorgängen in der Brennkammer der Gasturbine.

Die Vibrationen bedingen eine instabile Flammenfront, die ihrerseits eine stärkere Erhitzung der Brennkammer bewirkt. Diese kann zu Schädigungen der Brennkammer der Gasturbine führen.

Um geeignete Abhilfemaßnahmen gegen das Problem der Verbrennungsschwingungen ergreifen zu können, wird in [2] das Schwingungsphänomen eingehend untersucht und Möglichkeiten zur Beseitigung, insbesondere aktive und passive Methoden, verglichen und diskutiert.

[2] stellt fest bzw. schlägt vor, die schädigenden Schwingungen durch konstruktive Optimierung einer Brennkammergeometrie zu eliminieren.

Gegen eventuell erneut auftretende Schwingungsprobleme bei einer Erweiterung eines Arbeitsbereichs der Gasturbine schlägt [2] eine Aktive Instabilitätskontrolle (AIC) auf Basis einer antizyklischen Modulation eines Kraftstoffstroms vor.

Allerdings verlangt die AIC eine aufwendige und teure Sensorik und Aktorik, was ihre Einsatzmöglichkeit beschränkt.

Ferner ist bekannt, dass sich dieses schädigende Brummen auch durch Reduktion einer Last auf die Gasturbine reduzieren oder vermeiden lässt, d.h. es ist bekannt, dass die Last auf eine Gasturbine einen großen Einfluss auf das bzw. eine starke Abhängigkeit oder Korrelation mit dem (schädliche) Brennkammerbrummen aufweist.

Die Reduktion der Last zur Reduzierung oder Vermeidung von Schädigungen einer Brennkammer einer Gasturbine ist allerdings eine nur bedingt praktikable Lösungsmöglichkeit.

In der Regel werden nämlich von Betreibern von Kraftwerken Leistungszusagen gegenüber ihren Abnehmern gegeben, die bei einer Leistungsreduktion der Gasturbinen in Gefahr geraten, nicht erfüllt zu werden.

Demzufolge ist es von Interesse, weitere Einflussgrößen auf den Brennvorgang bzw. auf das Brummen neben die der Last, der Geometrie und des Kraftstoffstroms zur Reduzierung oder Vermeidung des schädlichen Brennkammerbrummens zu kennen.

Im allgemeinen ist es somit wünschenswert, den Einfluss einzelner Einflussgrößen auf den Brennvorgang wie auch Abhängigkeiten von Einflussgrößen untereinander qualitativ und/oder quantitativ mit hinreichender Genauigkeit zu kennen.

Diese Kenntnis könnte insbesondere ermöglichen, allgemeine Problemstellungen im Umfeld von Brennvorgängen zu lösen sowie das Problem Brennkammerbrummen im Speziellen durch andere Einflussgrößen bzw. geeignete Kombinationen anderer Größen wirksamer oder preiswerter reduzieren zu können

## Datenanalyse unter Verwendung eines Netzwerks

Es ist allgemein bekannt, Netzwerke aus Knoten und Verbindungen auf einem Gebiet einer Datenanalyse dazu zu verwenden, um komplexe Datenstrukturen und Abhängigkeiten von Daten in den Datenstrukturen zu erkennen und zu beschreiben.

Aus [3] ist eine solche Datenanalyse unter Verwendung eines Netzwerks vom Typ "kausales Netz" bekannt.

Anschaulich gesehen ist ein solches kausales Netz ein statistisches Modell der dadurch beschriebenen Daten.

Ein solches kausales Netz, wie aus [3], ist ferner insbesondere geeignet, um statistische Eigenschaften von Daten, beispielsweise eine statistische Abhängigkeit bzw. Unabhängigkeit zwischen zwei Variablen, zu erkennen und zu beschreiben.

Ferner ist aus [3] ein Verfahren zum Entfernen von bestimmbaren Verbindungen aus dem Netzwerk bekannt, ein sogenanntes Polynomial-Complexity-Verfahren (PC-Verfahren).

Eine Datenanalyse unter Verwendung eines kausalen Netzes, welches vom Subtyp Bayesianisches bzw. Bayessches Netz [4] ist, ist ebenfalls aus [3] bekannt.

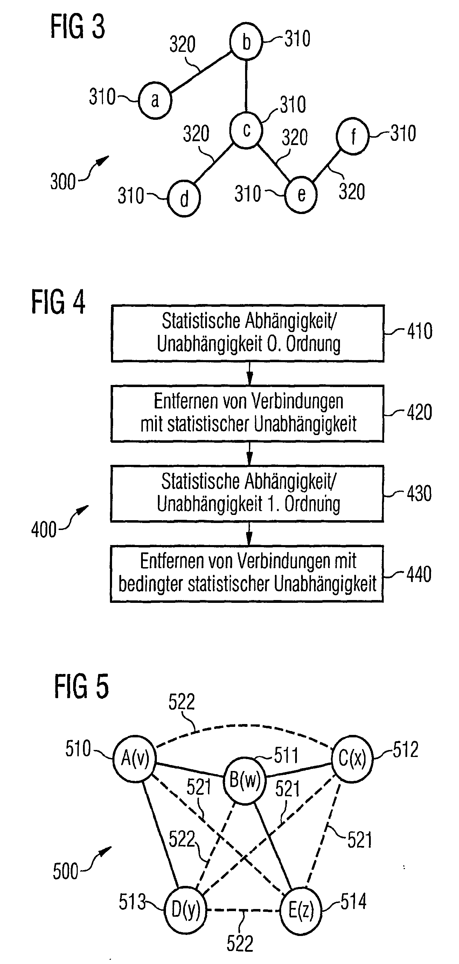

Bei dieser Datenanalyse mittels des Bayesianischen Netzes werden statistische Abhängigkeiten bzw. statistische Unabhängigkeiten, im allgemeinen statische Eigenschaften, zwischen den Daten ermittelt (gelernt). Die statistischen Eigenschaften der Daten können dann graphisch unter Verwendung des Netzwerkes aus Knoten und Verbindungen dargestellt (Fig.3) werden.

Fig.3 zeigt diese graphischen Darstellung mit dem Netzwerk 300 aus Knoten 310 und Verbindungen 320. Jeweils zwei Knoten 310 des Netzwerks 300 sind durch eine Verbindung 320 miteinander verbunden.

Ein Knoten 310 des Netzwerks 300 repräsentiert ein Datum (Variable). Eine Verbindung 320 repräsentiert eine statistische Abhängigkeit zwischen den durch diese Verbindung 320 verbundenen Knoten 310 bzw. Variablen. Nicht verbundene Knoten 310 sind statistisch unabhängig voneinander.

Fig.4 zeigt schematisch eine Vorgehensweise 400 bei einer Datenanalyse gemäß dem aus [3] bekannten PC-Verfahren, welche zu der (beispielhaft in Fig.3 dargestellten Netzwerkstruktur 300 führt.

Ziel der Datenanalyse ist die Ermittlung von Abhängigkeiten bzw. Unabhängigkeiten zwischen zu analysierenden Daten und eine Darstellung der Abhängigkeiten bzw. Unabhängigkeiten zwischen den Daten, damit einer in den Daten enthaltenen Struktur, durch eine Netzwerkstruktur bzw. durch ein Netzwerk.

Unter einer in den Daten enthaltenen Struktur ist im allgemeinen eine statistische Abhängigkeit und/oder eine statistische Unabhängigkeit zwischen den Variablen zu verstehen.

Die Daten für die Datenanalyse sind Variablen v, w, x, y, und z. Gegeben sind Datentupel $(v, w, x, y, z)_i$ mit i=1... N (N = Anzahl der vorgegeben Datentupel).

Bei der Analyse wird eine statistische Abhängigkeit bzw. Unabhängigkeit zwischen den Variablen v, w, x, y und z ermittelt.

In Fig.5 ist ein Netzwerk 500 dargestellt aus Knoten A 510, B 511, C 512, D 513 und E 514, welche die Variablen v, w, x, y und z repräsentieren.

In einem ersten Schritt 410 der Vorgehensweise 400 wird unter Verwendung eines statistischen Testverfahrens, einem $\chi^2$-Test, welcher in [5] beschrieben ist, eine statistische Unabhängigkeit bzw. statistische Abhängigkeit jeweils zwischen zwei Variablen, beispielsweise (v,w), (x,z) oder (v,y), ermittelt (statistische Unabhängigkeit bzw. Abhängigkeit 0. Ordnung).

In einem zweiten Schritt 420 werden aus dem Netzwerk 500, welches eine Startkonfiguration aufweist, bei der alle Knoten untereinander mit Verbindungen verbunden sind, solche Verbindungen 521 entfernt, welche jeweils zwei Knoten, beispielsweise (A,E), (C,D) und (C,E), verbinden, für deren zugehörige Variablen eine statistische Unabhängigkeit ermittelt wurde, beispielsweise (v, z), (x, y) und (x, z).

In einem dritten Schritt 430 wird für jeweils zwei Variablen, für welche eine statistische Abhängigkeit ermittelt wurde, eine bedingte statistische Abhängigkeit bzw. Unabhängigkeit unter der Bedingung einer dritten Variablen ermittelt, beispielsweise (v,x|w), (v,y|w) oder (w,x|v) (statistische Unabhängigkeit bzw. Abhängigkeit 1. Ordnung). Dazu wird ebenfalls der $\chi^2$-Test, welcher in [5] beschrieben ist, verwendet.

In einem vierten Schritt 440 werden in dem Netzwerk 500 solche Verbindungen 522 entfernt, welche jeweils zwei Knoten, beispielsweise (A,C), (B,D) und (D,E), verbinden, für deren zugehörige Variablen eine bedingte statistische Unabhängigkeit ermittelt wurde.

Nach dem vierten Schritt weist das Netzwerk 500 eine Struktur auf (Endkonfiguration), welche die statistischen Eigenschaften der Daten beschreibt.

**Bayessche Netzwerke**

Aus [4] ist ein kausales Netz, ein Bayesianisches (Bayessches) Netzwerk, bekannt.

Ein Bayessches Netzwerk B ist ein spezieller Typ der Darstellung einer gemeinsamen multivariaten Wahrscheinlichkeitsdichtefunktion (WDF) einer Menge von Variablen X durch ein graphisches Modell.

Es ist durch einen gerichteten azyklischen Graphen (directed acyclic graph, *DAG*) G definiert, in welchem jeder Knoten i = 1, ..., n einer Zufallsvariablen $X_i$ entspricht.

Die Kanten zwischen den Knoten repräsentieren statistische Abhängigkeiten und können als Kausalzusammenhänge zwischen ihnen interpretiert werden. Der zweite Bestandteil des Bayesschen Netzwerkes ist die Menge von bedingten WDFen $P(X_i| Pa_i, \theta, G)$, welche mittels eines Vektors $\theta$ parametriert sind.

Diese bedingten WDFen spezifizieren die Art der Abhängigkeiten der einzelnen Variablen i von der Menge ihrer Elternknoten (Parents) $Pa_i$. Somit kann die gemeinsame WDF in die Produktform

$$(1) \qquad P(X_1, X_2, \ldots X_n) = \prod_{i=1}^{n} P(X_i | P_{a_i}, \Theta, G)$$

zerlegt werden.

Der DAG eines Bayesschen Netzwerkes beschreibt auf eindeutige Weise die bedingten Abhängigkeits- und Unabhängigkeitsbeziehungen zwischen einer Menge von Variablen, jedoch hat im Gegensatz dazu eine gegebene statistische Struktur der WDF keinen eindeutigen *DAG* zur Folge.

Vielmehr kann gezeigt werden, dass zwei DAG ein und dieselbe WDF beschreiben, dann und nur dann, wenn sie dieselbe Menge von Kanten und dieselbe Menge von "Colliders" aufweisen, wobei ein Collider eine Konstellation ist, in welcher wenigstens zwei gerichtete Kanten zu demselben Knoten führen.

Aus [6] ist ein weiteres Verfahren zur Ermittlung von zur Entfernung geeigneten Gewichten eines neuronalen Netzes und zur Entfernung von Gewichten aus einem neuronalen Netz, ein sogenanntes Pruning-Verfahren, bekannt.

Aus [7] ist ein Verfahren zur Optimierung der Effizienz eines Dampfkessels bekannt. Da hierfür ein Bayes-Modell durch Experten von Hand erstellt wird, ist vor Beginn der Optimierung kein Training des Verfahrens mit Datensätzen aus der Vergangenheit erforderlich.

Der Erfindung liegt die Aufgabe zugrunde, ein Verfahren anzugeben, welches eine zuverlässigere und genauere Analyse von Einflussgrößen auf einen Brennvorgang ermöglicht.

Diese Aufgabe wird durch das Verfahren, durch das Computerprogramm mit Programmcode-Mitteln und das Computerprogramm-Produkt zur Analyse von Einflußgrößen auf einen Brennvorgang in einer Brennkammer mit den Merkmalen gemäß dem jeweiligen unabhängigen Patentanspruch gelöst.

Das Verfahren zur Analyse von Einflussgrößen auf einen Brennvorgang in einer Brennkammer basiert auf einer Verwendung eines trainierbaren, statistischen Modells.

Dieses trainierbare, statistische Modell wird mindestens unter Verwendung von vorgegebenen Werten der Einflussgrößen (Trainingsdaten) trainiert, wobei Gewichte des trainierbaren, statistischen Modells verändert bzw. angepasst werden.

Bei dem Training des Modells werden demnach die Gewichte unter Verwendung von Trainingsdaten angepasst.

Die Veränderung bzw. Anpassung der Gewichte bei dem Training erfolgt derart, dass das trainierte, statistische Modell den Brennvorgang beschreibt (modelliert).

Weiterhin wird ein sogenanntes Pruning der Gewichte durchgeführt.

Unter Verwendung des trainierten, statistischen Modells bzw. der veränderten, angepassten Gewichte kann dann ein Einfluss der Einflussgrößen auf den Brennvorgang analysiert werden.

Dabei ermöglicht diese Analyse (basierend auf dem trainierten, statistischen Modell bzw. dessen angepassten Gewichten) sowohl qualitative als auch quantitative Aussagen über den Einfluss der Einflussgrößen auf den Brennvorgang. Abhängigkeiten von den Einflussgrößen untereinander wie auch einzeln und in Kombination auf den Brennvorgang können erkannt werden.

Die Einflussgrößen können nach Größe ihres Einflusses auf den Brennvorgang geordnet werden. Unwichtige Einflussgrößen können identifiziert werden.

Ursachenanalysen für Brennvorgangsprobleme, Wirkungsanalysen für vorgebbare Brennvorgangszustände, welche durch vorgegebene Werte für die Einflussgrößen beschrieben werden können, bzw. Simulationen und Prognosen von Brennvorgängen bzw. Brennvorgangszustände können durchgeführt werden.

Ferner können bei der Analyse Ursache-Wirkungszusammenhänge bei dem Brennvorgang offensichtlich gemacht werden.

Das Computerprogramm mit Programmcode-Mitteln ist eingerichtet, um alle Schritte gemäß dem erfindungsgemäßen Verfahren durchzuführen, wenn das Programm auf einem Computer ausgeführt wird.

Das Computerprogramm-Produkt mit auf einem maschinenlesbaren Träger gespeicherten Programmcode-Mitteln ist eingerichtet, um alle Schritte gemäß dem erfindungsgemäßen Verfahren durchzuführen, wenn das Programm auf einem Computer ausgeführt wird.

Das Computerprogramm mit Prögrammcode-Mitteln, eingerichtet um alle Schritte gemäß dem erfinderischen Verfahren durchzuführen, wenn das Programm auf einem Computer ausgeführt wird, sowie das Computerprogramm-Produkt mit auf einem maschinenlesbaren Träger gespeicherten Programmcode-Mitteln, eingerichtet um alle Schritte gemäß dem erfinderischen Verfahren durchzuführen, wenn das Programm auf einem Computer ausgeführt wird, sind insbesondere geeignet zur Durchführung des erfindungsgemäßen Verfahrens oder einer seiner nachfolgend erläuterten Weiterbildungen.

Ferner sei hier angemerkt, dass die erfinderische Vorgehensweise im Allgemeinen auf andere komplexe, Systeme anwendbar bzw. übertragbar ist, wie industrielle Produktionsprozesse, beispielweise im Gebiet der Papier- und/oder Stahlerzeugung, Energieerzeugungsprozesse und/oder Energieerzeugungsanlagen.

Darüber hinaus muss darauf hingewiesen werden, dass die Erfindung eine allgemeine Herangehensweise schafft, um Problemlösungen im Umfeld von Brennvorgängen zu ermöglichen und/oder zu erleichtern.

Bevorzugte Weiterbildungen der Erfindung ergeben sich aus den abhängigen Ansprüchen.

Die im weiteren beschriebenen Weiterbildungen beziehen sich sowohl auf die Verfahren als auch auf das Computerprogramm und auf das Computer-Programmprodukt.

Die Erfindung und die im weiteren beschriebenen Weiterbildungen können sowohl in Software als auch in Hardware, beispielsweise unter Verwendung einer speziellen elektrischen Schaltung, realisiert werden.

Ferner ist eine Realisierung der Erfindung oder einer im weiteren beschriebenen Weiterbildung möglich durch ein computerlesbares Speichermedium, auf welchem das Computerprogramm mit Programmcode-Mitteln gespeichert ist, welches die Erfindung oder Weiterbildung ausführt.

Auch kann die Erfindung oder jede im weiteren beschriebene Weiterbildung durch ein Computerprogrammerzeugnis realisiert sein, welches ein Speichermedium aufweist, auf welchem das Computerprogramm mit Programmcode-Mitteln gespeichert ist, welches die Erfindung oder Weiterbildung ausführt.

Bei einer Weiterbildung umfassen die Einflussgrößen mindestens einige der folgenden Größen und/oder davon abgeleitete Größen:

einen Luftdruck außen, einen Gasdruck, einen Druck nach einer Kompression, eine Druckdifferenz an einem Luftfilter, ein Pilotgas, einen Pilotgashub, eine Last, eine Lufttemperatur, eine Gastemperatur, eine Temperatur nach einer Kompression, eine Druckreduktion in einer Brennkammer, eine "blade"-/Schaufel-Position, eine Last, eine Gasturbinenleistung (GtLstg), eine Ansaugtemperatur (air temperature inflow) (SaugT), einen Umgebungsluftdruck (air pressure) (UmgPr), einen Druckverlust über einen Luft-/Ansaugfilter (pressure difference air filter, PrDFi), einen Druck nach einer Kompression/einen Verdichterdruck (pressure after compression, stage (VerPr)), eine Temperatur nach einer Kompression/ Verdichterendtemperatur (temperature after compression stage (VerdT)), eine Vorleit-Schaufelstellung, einen Druckverlust in einer Brennkammer (pressure difference burning chamber (DrVBr)), einen Gasdruck (gas pressure (GasDr)), eine Gastemperatur (gas temperature (GasT)), eine Rotationsfrequenz (rotation frequency), eine Drehzahl, eine Abgastemperatur (exhaust gas temperature (AbgasT)), eine erste Brummgröße (humming pressure amplitude (WD01)), eine zweite Brummgröße (humming pressure amplitude (WD02)).

Darüber hinaus können die Einflussgrößen weitere Größen zur Beschreibung (weiterer) Brennstoffströme, Brennstoffdrücke, Brennstofftemperaturen oder Verhältnissen von Brennstoffströmen umfassen.

Weiter kann vorgesehen werden, dass der Brennvorgang unter Verwendung einer ein Brennkammerbrummen beschreibenden Größe beschrieben wird, wobei die Einflussgrößen auf diese das Brennkammerbrummen beschreibende Größe abgebildet werden können.

Wird so beispielsweise der Brennvorgang unter Verwendung einer eine Nox-Emission beschreibende Größe beschrieben, werden die Einflussgrößen auf diese die Nox-Emission beschreibende Größe abgebildet.

Auch kann vorgesehen werden, dass diese das Brennkammerbrummen beschreibende Größe, wie die oben genannte die Nox-Emission beschreibende Größe, eine Targetgröße bei dem Training, ist.

Das trainierbare, statistische Modell kann auf verschiedene Arten realisiert werden, beispielsweise durch ein neuronales Netz, insbesondere durch ein Feedforward neuronales Netz, oder durch ein kausales Netz, beispielsweise vom Typ Bayessches Netz, oder durch einen Entscheidungsbaum.

Bei einer Weiterbildung ist vorgesehen, dass die Brennkammer eine Brennkammer einer Turbine, insbesondere einer Gasturbine, ist.

Weiter ist vorgesehen, eine Weiterbildung im Rahmen einer Sensitivitätsanalyse für die Einflussgrößen eines Brennvorgangs einer Brennkammer einzusetzen.

Auch kann eine Weiterbildung eingesetzt werden zu einer Ermittlung einer Reihenfolge einer Wichtigkeit von Einflussgrößen auf ein Brennkammerbrummen einer Brennkammer.

Weiter kann eine Ausgestaltung eingesetzt werden zu einer Ermittlung einer Reihenfolge einer Wichtigkeit von den Einflussgrößen, insbesondere einer Wichtigkeit von Einflussgrößen auf eine Nox-Emission einer Brennkammer.

In Figuren ist ein Ausführungsbeispiel der Erfindung dargestellt, welches im weiteren näher erläutert wird.

Es zeigen

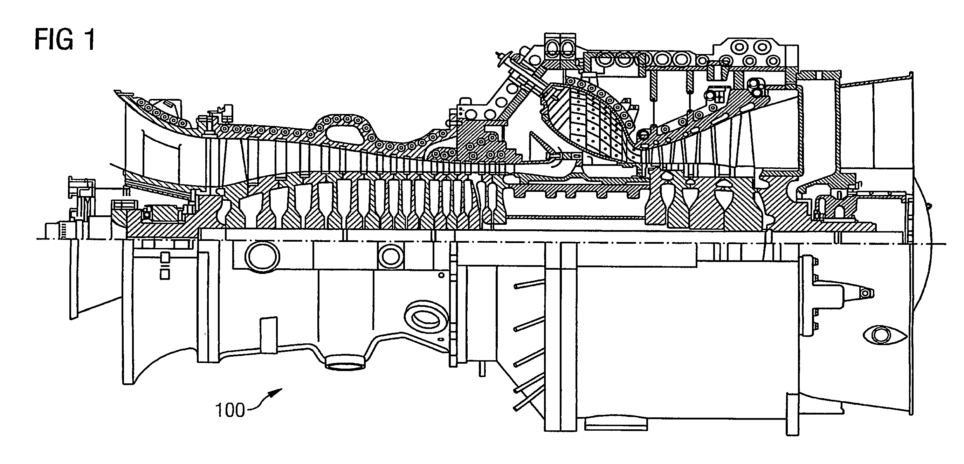

Figur 1      eine Skizze einer Brennkammer einer Gasturbine gemäß einem Ausführungsbeispiel;

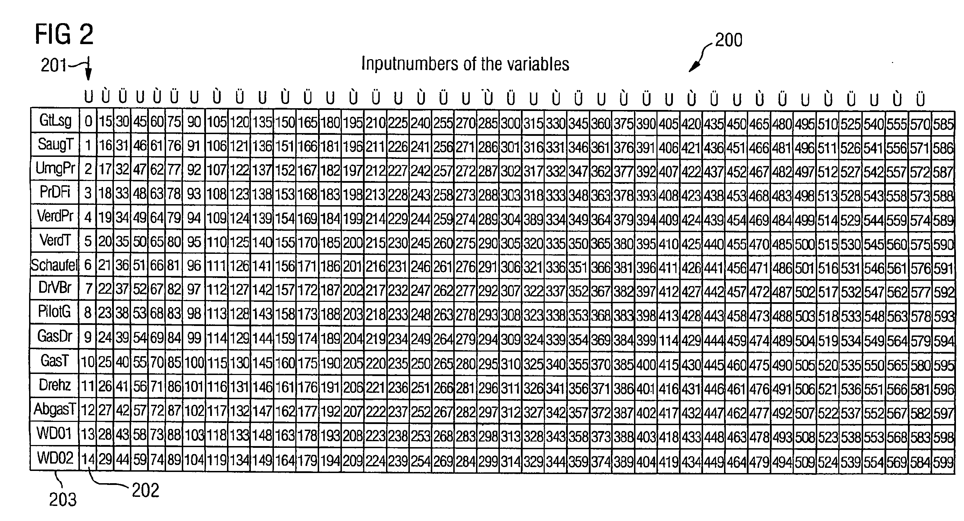

Figur 2      eine Skizze eines Input-Datensatzes mit Zustandsvek- toren mit Einflussgrößen (Variablen) auf einen Brennvorgang in einer Brennkammer einer Gasturbine gemäß einem Ausführungsbeispiel;

Figur 3      ein Netzwerk aus Knoten und Verbindungen;

Figur 4      Verfahrensschritte bei einem Polynomial-Complexity- Verfahren;

Figur 5      ein Bayesianisches Netz, welches unter Verwendung ei- nes Polynomial-Complexity-Verfahren bearbeitet wird;

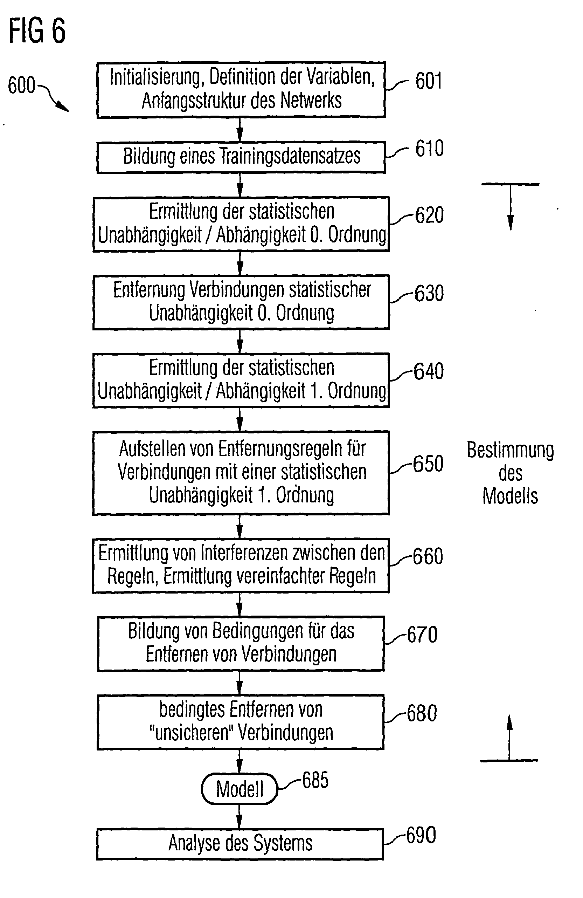

Figur 6      eine Vorgehensweise bei einer Analyse eines Systems "Brennkammer" basierend auf einer Ermittlung eines statistischen Modells des Systems "Brennkammer" gemäß einem Ausführungsbeispiel;

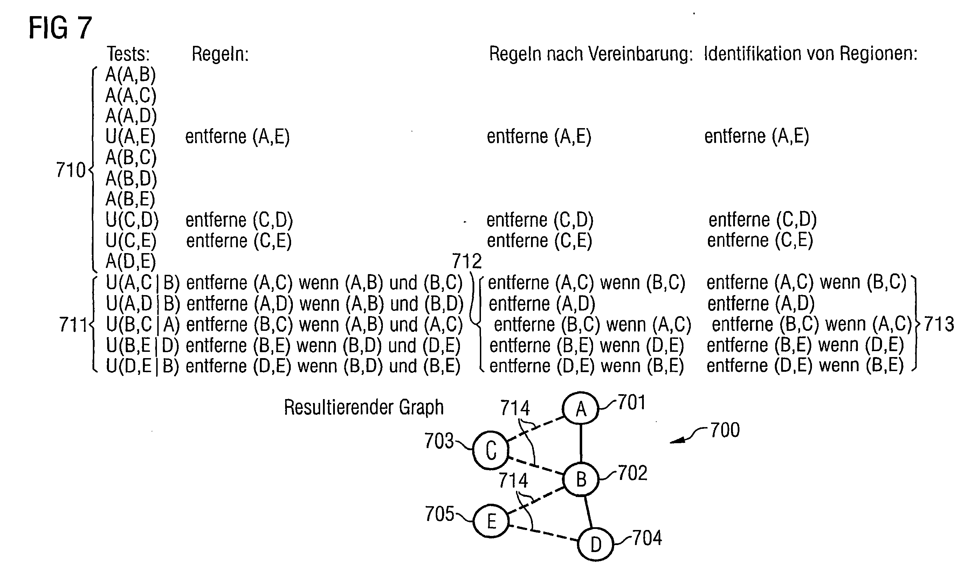

Figur 7      ein vereinfachtes statistisches Modell gemäß einem Ausführungsbeispiel;

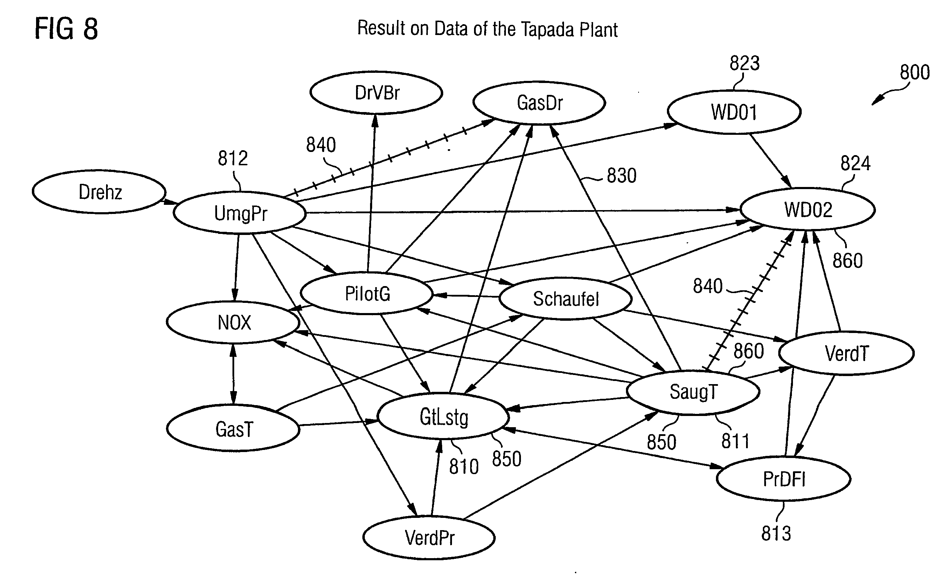

Figur 8      eine Skizze mit verschiedenen, bedingten Endstruktu- ren eines Netzwerks, welches das System "Brennkammer" beschreibt, gemäß einem Ausführungsbeispiel;

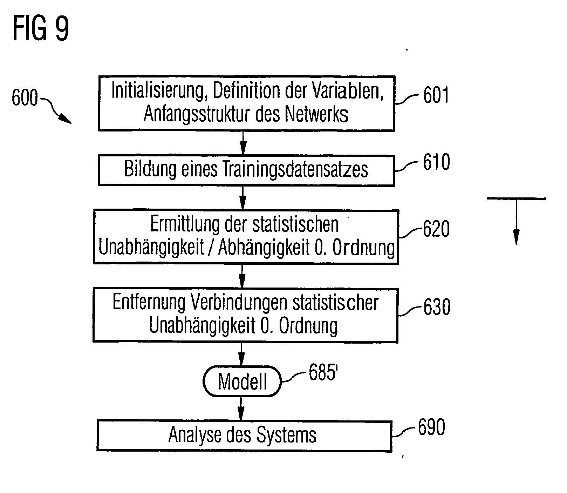

Figur 9      eine Vorgehensweise bei einer Analyse eines Systems "Brennkammer" basierend auf einer vereinfachten Er- mittlung eines statistischen Modells des Systems "Brennkammer" gemäß einem alternativen Ausführungs- beispiel;

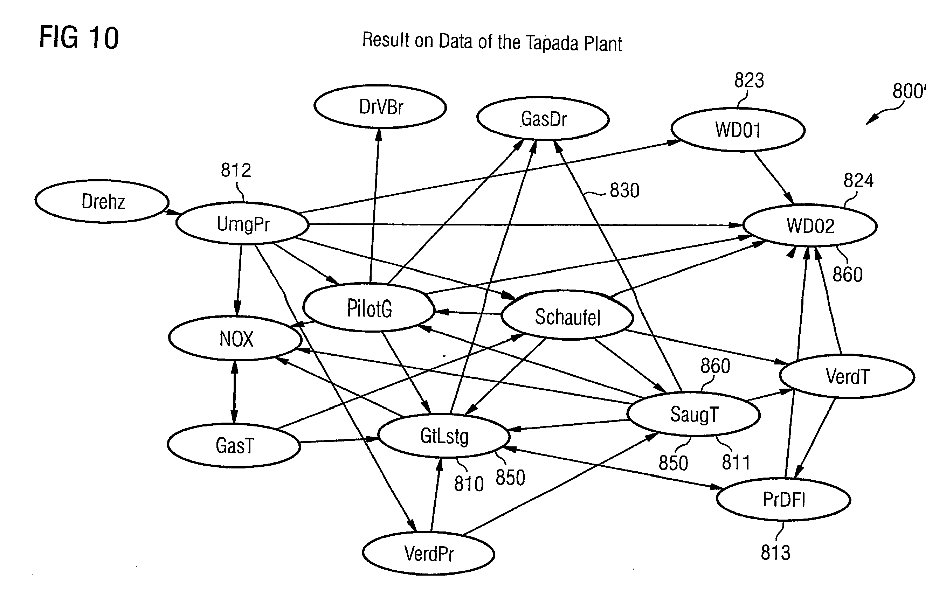

Figur 10     eine Skizze mit einer vereinfachten Endstruktur ei- nes Netzwerks, welches das System "Brennkammer" be- schreibt, gemäß einem alternativen Ausführungsbeispiel;

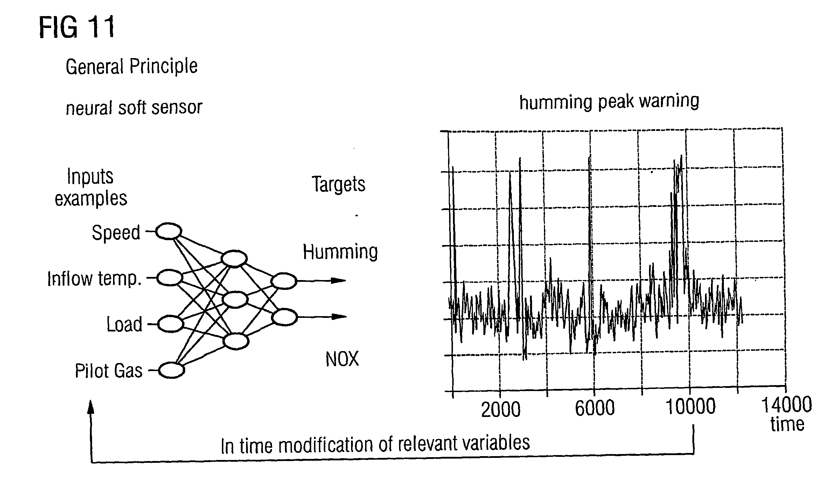

Figur 11     eine Skizze einer Vorgehensweise zur Identifikation von wichtigen Einflussgrößen auf ein Brennkammerbrum- men;

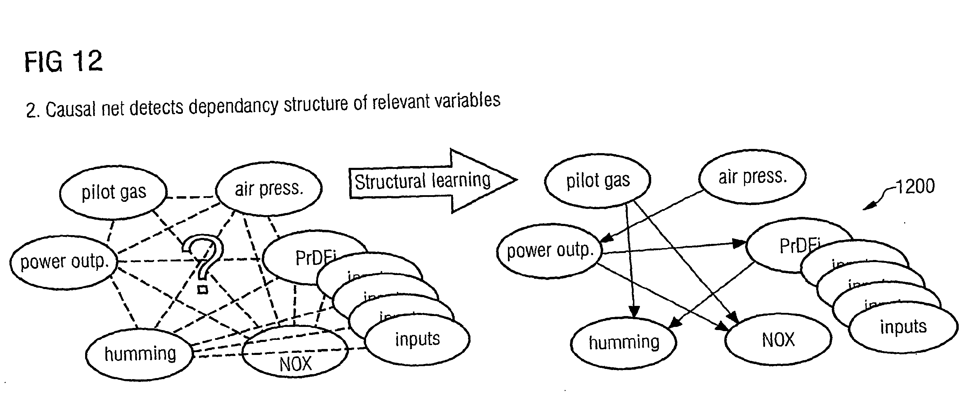

Figur 12     eine Skizze einer Vorgehensweise zur Identifizierung von Abhängigkeiten von Einflussgrößen.

**Ausführungsbeispiel: Analyse eines Brennvorgangs in einer Gasturbinenbrennkammer**

<u>Fig.1</u> zeigt schematisch eine Ringbrennkammer-Gasturbine 100 einer V84.3A Serie, wie sie in [2] beschrieben ist.

Bei dieser Ringbrennkammer-Gasturbine 100 zeigt sich unter gewissen Betriebsbedingungen im Vormischbetrieb ein "Brummen" aufgrund selbsterregter Verbrennungsschwingungen.

Bei der Verbrennung in geschlossenen Brennräumen kann es zu einer Rückkopplung zwischen der Leistungsfreisetzung in der Flamme und der Akustik in der Brennkammer kommen. Dabei wird durch Schwankungen in der Leistungsfreisetzung der Verbrennung ein Schallfeld im Brennraum angeregt, das wiederum erneute Schwankungen in der Verbrennungsleistung hervorruft. Erfolgen die Druck- und Leistungsschwingungen ausreichend in Phase, ist also ein sogenanntes Rayleigh-Kriterium erfüllt, so kommt es zu einer Selbstverstärkung der Oszillationen.

Dieses als selbsterregte Brennkammer- oder Verbrennungsschwingung bekannte Phänomen ist oft mit sehr hohen Schalldruckamplituden und einem stark erhöhten Wärmeübergang an die Brennkammerwände verbunden, was zu einer verstärkten mechanischen und thermischen Belastung des Systems führt. Das durch Brennkammerschwingungen verursachte Schadensspektrum reicht von erhöhter Lärmemission über Leistungsminderungen bis zur Beschädigung einzelner Maschinenteile.

Um geeignete Abhilfemaßnahmen gegen das Problem der Verbrennungsschwingungen (Brennkammerbrum- men), wie sie in der V84.3A auftreten, ergreifen zu können, wird ein Verbrennungsvorgang in der Brennkammer, im folgenden als "System Brennkammer" bezeichnet, eingehender untersucht bzw. analysiert.

Kernpunkte der Untersuchung bzw. Analyse bilden eine Erfassung von Brennkammerzuständen, beispielsweise durch Messung von Brennkammerzuständen, Eingabe oder Einlesen von Brennkammerdaten aus einem Speicher, und eine anschließende mittels eines Rechners durchgeführte statistische Auswertung und Analyse der erfassten Informationen.

Bei der statistischen Auswertung wird in einem ersten Fall ein statistische Modell, ein kausales Netz, für das System "Brennkammer" im allgemeinen gebildet (Modellierung gemäß Fall 1). In einem zweiten Fall wird ein statistisches Modell, ein neuronales netz vom Typ Feedforward, für ein System "Brennkammerbrummen" - eine Art Spezialfall des allgemeinen Falls 1, des System "Brennkammer", - gebildet (Modellierung gemäß Fall 2).

Die statistische Modelle sind jeweils Grundlage für die nachfolgenden Analysen.

**Fall 1: Allgemeines Brennkammermodell (Modell Brennkammer)**

Bei einer Messung eines Brennkammerzustandes werden aktuelle Parameterwerte gemessen und in Form eines Zustandsvektors in einem Speicher des Rechners gespeichert. Entsprechendes gilt im Falle eines Einlesens oder Eingebens von Brennkammerdaten.

Eine solche Zustandsmessung von Parameterwerten wird in Zeitschritten von 1s ständig bzw. für einen vorgegebenen Zeitraum wiederholt, wobei eine Zeitreihe von Zustandsvektoren generiert wird.

Diese werden zusammengefasst und als Datensatz gespeichert.

In Fig.2 ist ein solcher Datensatz 200 schematisch bzw. tabellarisch dargestellt. Fig.2 zeigt den Datensatz 200 mit einer Vielzahl von Zustandsvektoren 201, deren jeder die Parameterwerte 202 einer Messung eines Brennkammerzustands umfasst.

Eine Zustandvektor umfasst beispielsweise jeweils die Werte folgender messbaren Parameter 203:

- GtLstg
- SaugT
- UmgPr
- PrDFi
- VerdPr
- VerdT
- Schaufel
- DrVBr
- PilotG
- GasDr
- GasT
- Drehz
- AbgasT
- WD01 (erste Wechseldruckamplitude)
- WD02 (zweite Wechseldruckamplitude).

Es ist darauf hinzuweisen, dass obige Auflistung von Parametern nicht abschließend zu verstehen ist. Ein Zustandsvektor 201 kann auch weitere oder auch weniger oder auch abgeleitete Parameter bzw. Parameterwerte umfasst.

Zur Modellierung des Systems "Brennkammer", insbesondere zur Verifizierung und Analyse von Einflussgrößen auf den Verbrennungsvorgang sowie zur Ermittlung statistischer Eigenschaften, welche die Einflussgrößen (Variable) des Systems "Brennkammer" zueinander aufweisen, werden unter Verwendung der Parameter Variable des Systems "Brennkammer" definiert. Diese sollen einen Brennkammerzustand bzw. den Brennvorgang möglichst umfassend beschreiben (vgl. Fig.6, Verfahrensschritt 601) .

Es werden wie nachfolgend beschrieben statistische Abhängigkeiten bzw. Unabhängigkeiten zwischen den Variablen ermittelt (vgl. Fig.6, Verfahrensschritte 610 bis 680).

Unter Verwendung dieser statistischen Größen wird ein statistisches Modell, ein sogenanntes Bayesianisches Netz [4], des Systems "Brennkammer" bestimmt (vgl. Fig.6, 690).

Unter Verwendung des statistischen Modells 685 bzw. des Bayesianischen Netzes 685 wird anschließend eine weiterführende Analyse des Systems "Brennkammer" und damit eines Brennvorgangs durchgeführt (vgl. Fig.6, Verfahrensschritt 690).

Fig.6 zeigt Verfahrensschritte 601 bis 680, welche bei einer Ermittlung eines statistischen Modells des Systems "Brennkammer" 685 durchgeführt werden:

In einem Initialisierungsschritt 601 werden die Variablen des Systems "Brennkammer" festgelegt.

Die definierten Variablen des Systems "Brennkammer" sind:

- GtLsg
- SaugT
- UmgPr
- PrDFi
- VerdPr
- VerdT
- Schaufel
- DrVBr
- PilotG

- GasDr
- GasT
- Drehz
- AbgasT
- WD01
- WD02

und stimmen in diesem Fall mit den messbaren Parametern 203 überein.

Es ist zu betonen, dass diese Übereinstimmung nicht notwendigerweise immer gegeben sein muss. Der Satz von Variablen bzw. von Einflussgrößen wie obig kann eine Teilmenge aus den messbaren Parametern 203 sein oder auch (zumindest zum Teil) durch Kombinationen von bestimmten Parametern 203 gewonnen werden.

Auch ist diese Aufzählung von Variablen nicht als abschließend zu verstehen. Es können durchaus weitere Variablen definiert werden, welche das System "Brennkammer" beschreiben. Die Variablen werden zu einem sogenannten Modellzustandsvektor zusammengefasst, wobei Komponenten des Modellzustandsvektors die Variablen sind.

In dem Initialisierungsschritt 601 wird ferner eine Anfangsstruktur eines Netzwerk bestimmt, welches aus Knoten und Verbindungen aufgebaut ist und welches eine Struktur, welche in dem System "Brennkammer" enthalten ist, be-schreibt.

Die Anzahl der Knoten wird entsprechend der Anzahl der Variablen des Systems "Brennkammer" festgelegt. Jeder Knoten repräsentiert eine Variable dieses Systems.

Bei der Anfangsstruktur sind alle Knoten miteinander verbunden, was eine anfänglich angenommene und später zu verifizierende Abhängigkeit zwischen allen Variablen bedeutet.

In einem ersten Schritt 610 wird ein sogenannter Trainingsdatensatz des Systems "Brennkammer" ermittelt. Unter Verwendung dieses Trainingsdatensatzes wird wie nachfolgend beschrieben das Netzwerk derart bearbeitet bzw. trainiert, dass eine Endstruktur des Netzwerks eine in dem System "Brennkammer" enthaltenen Struktur beschreibt.

Dazu werden aus einem vorgegeben Datensatz Modellzustandsvektoren extrahiert und zu einem Trainingsdatensatz zusammengefasst 610.

Dieses gestaltet sich in diesem Fall sehr einfach, da die Parameter mit den Variablen übereinstimmen, d.h. der Zustandsvektor mit dem Modellzustandsvektor übereinstimmt.

In einem zweiten Schritt 620 wird unter Verwendung eines statistischen Testverfahrens, einem $\chi^2$-Test, welcher in [5] beschrieben ist, und des Trainingsdatensatzes (vgl. Schritt 610) eine direkte statistische Unabhängigkeit bzw. direkte statistische Abhängigkeit jeweils zwischen zwei Variablen des Systems ermittelt (statistische Unabhängigkeit bzw. Abhängigkeit 0. Ordnung).

Es wird ermittelt:

- U/A(PilotG, GasDr),
- U/A(PilotG, Nox),
- U/A (PilotG, Drehz),
- U/A(PiltG, GasT),
- u.s.w.,

wobei mit U/A(a,b) die statistische Unabhängigkeit U bzw. die statistische Abhängigkeit A zwischen der Variablen a und der Variablen b bezeichnet wird.

In einem dritten Schritt 630 werden aus dem Netzwerk, welches die Startkonfiguration aufweist, solche Verbindungen entfernt, welche jeweils zwei Knoten verbinden, für deren zugehörige Variablen eine statistische Unabhängigkeit U ermittelt wurde.

In einem vierten Schritt 640 wird für jeweils zwei Variablen, für welche eine statistische Abhängigkeit ermittelt wurde, eine bedingte statistische Abhängigkeit bzw. Unabhängigkeit unter der Bedingung einer dritten Variablen ermittelt (statistische Unabhängigkeit bzw. Abhängigkeit 1. Ordnung).

Dazu wird ebenfalls der $x^2$-Test, welcher in [5] beschrieben ist, verwendet.

Es wird ermittelt:

- U/A(DrVBR, GasDr)| PilotG),
- U/A(PilotG, VerdT| Schaufel),
- U/A(PilotG, Nox| UmgPr),
- U/A (GtLstg, VerdT| SaugT),
- u.s.w.,

wobei mit U/A(a,b|c) die statistische Unabhängigkeit U bzw. die statistische Abhängigkeit A zwischen der Variablen a und der Variablen b unter der Bedingung der Variablen c bezeichnet wird.

In einem fünften Schritt 650 werden für solche Verbindungen, für deren zugehörige Knoten eine bedingte statistische Unabhängigkeit U ermittelt wurde (vgl. U(a,b|c), Schritt 640), Regeln für ein Entfernen dieser Verbindungen formuliert.

Anhand eines nachfolgend dargestellten, einfacheren weiteren Beispiels, dargestellt in Fig. 7, einem Netzwerk 700 mit Knoten A (701), B (702), C (703), D (704) und E (705), welche die Variablen v, w, x, y und z repräsentieren, soll diese Vorgehensweise verdeutlicht werden:

Es wurden folgende direkte statistischen Unabhängigkeiten und Abhängigkeiten ermittelt und die entsprechenden Verbindungen in dem Netz entfernt (710):

a) direkte statistische Unabhängigkeiten (vgl. Schritt 620 und 630):

- U(A,E) Verbindung (A,E) entfernt,
- U(C,D) Verbindung (C,D) entfernt,
- U(C,E) Verbindung (C,E) entfernt;

b) direkte statistische Abhängigkeiten (vgl. Schritt 620):

- A(A,B), A(A,C), A(A,D), A(B,C), A(B,D), A(B,E), A(D,E) .

Es wurden folgende bedingte statistischen Unabhängigkeiten ermittelt und folgende Regeln für ein Entfernen von Verbindungen formuliert (711):

a) U(A,C|B);
die entsprechende Regel lautet:

entferne Verbindung (A,C), wenn Verbindung (A,B) und Verbindung (B,C) in dem Netzwerk vorhanden

b) U(A,D|B);
die entsprechende Regel lautet:

entferne Verbindung (A,D), wenn Verbindung (A,B) und Verbindung (B,D) in dem Netzwerk vorhanden

c) U(B,C|A);
die entsprechende Regel lautet:

entferne Verbindung (B,C), wenn Verbindung (A,B) und Verbindung (A,C) in dem Netzwerk vorhanden

d) U(B,E|D);
die entsprechende Regel lautet:

entferne Verbindung (B,E), wenn Verbindung (B,D) und Verbindung (D,E) in dem Netzwerk vorhanden

e) U(D,E|B);
die entsprechende Regel lautet:

entferne Verbindung (D,E), wenn Verbindung (B,D) und Verbindung (B,E) in dem Netzwerk vorhanden.

In einem sechsten Schritt 660 wird eine Interferenz in den Regeln ermittelt. Durch ein Vereinfachen der Regeln wird diese Interferenz beseitigt. Dadurch werden neue, vereinfachte Regeln formuliert.

Für das obige, weitere Beispiel ergeben sich folgende vereinfachte Regeln (712):

a) U(A,C|B);
die entsprechende Regel lautet:

entferne Verbindung (A,C), wenn Verbindung (B,C) in dem Netzwerk vorhanden

b) U(A,D|B);
die entsprechende Regel lautet:

entferne Verbindung (A,D)

c) U(B,C|A);
die entsprechende Regel lautet:

entferne Verbindung (B,C), wenn Verbindung (A,C) in dem Netzwerk vorhanden

d) U(B,E|D);
die entsprechende Regel lautet:

entferne Verbindung (B,E), wenn Verbindung (D,E) in dem Netzwerk vorhanden

e) U(D,E|B);
die entsprechende Regel lautet:

entferne Verbindung (D,E), wenn Verbindung (B,ED) in dem Netzwerk vorhanden.

In einem siebten Schritt 670 werden aus den vereinfachten Regeln Bedingungen für ein Entfernen der Verbindungen ermittelt. Verbindungen, welche nur unter einer solchen Bedingung aus dem Netzwerk gelöscht werden, werden als sogenannte unsichere Verbindungen bezeichnet.
Für das obige, weitere Beispiel ergeben sich folgende unsicheren Verbindungen (713):

a) unsichere Verbindung (A,C) mit der Bedingung:

entferne Verbindung (A,C), wenn Verbindung (B,C) in dem Netzwerk vorhanden

b) unsichere Verbindung (B,C) mit der Bedingung:

entferne Verbindung (B,C), wenn Verbindung (A,C) in dem Netzwerk vorhanden

d) unsichere Verbindung (B,E) mit der Bedingung:

entferne Verbindung (B,E), wenn Verbindung (D,E) in dem Netzwerk vorhanden

e) unsichere Verbindung (D,E):

entferne Verbindung (D,E), wenn Verbindung (B,E) in dem Netzwerk vorhanden.

In einem achten Schritt 680 werden die unsicheren Verbindungen aus dem Netzwerk "bedingt entfernt", d.h. es werden in dem Netzwerk die unsicheren Verbindungen gekennzeichnet, beispielsweise durch eine gestrichelte Verbindung 714, wobei die gestrichelte Verbindung bedeutet, dass diese Verbindung gegebenenfalls (falls die entsprechende Bedingung in dem Netzwerk erfüllt ist und damit diese unsichere Verbindung gelöscht wurde) nicht vorhanden ist oder dass diese Verbindung (falls die entsprechende Bedingung in dem Netzwerk nicht erfüllt ist und damit diese unsichere Verbindung nicht gelöscht wurde) vorhanden ist.
Somit ergeben sich durch diese Vorgehensweise mehrere verschiedene, bedingte Endstrukturen für das Netzwerk, welche in ihrer Gesamtheit die in den Daten vorhandene Struktur besser und flexibler beschreiben als dies nur mit einer einzigen, festen Endstruktur möglich wäre.
In Fig.8 sind die verschiedenen, bedingten Endstrukturen des Netzwerks 800, welches das System "Brennkammer" beschreibt, dargestellt.
Als Knoten 810 bis 824 sind in Fig.8 die Variablen:

- GtLsg 810
- SaugT 811
- UmgPr 812
- PrDFi 813

- VerdPr u.s.w.
- VerdT
- Schaufel
- DrVBr
- PilotG
- GasDr
- GasT
- Drehz
- AbgasT
- WD01
- WD02

dargestellt.

Die Endstrukturen bzw. das Netzwerk 800 weisen bzw. weist:

- feste Verbindungen 830, welche jeweils zwei Knoten 850 ohne eine zugehörige Bedingung verbinden,
- unsichere Verbindungen 840, welche jeweils zwei Knoten 860 unter einer Bedingung verbinden.
  Nicht aufgetreten ist bei dem Netzwerk 800
- ein Knoten, welche mit keinem anderen Knoten verbunden ist.

### Fall 2: Modell "Brennkammerbrummen" (Fig.11)

Entsprechend obiger Vorgehensweise bei dem Modell Brennkammer wird nun ein Modell, das Modell Brennkammerbrummen, entwickelt, welches insbesondere geeignet ist, zur Untersuchung und Analyse des Phänomens Brennkammerbrummen [2].

Dieses Modell Brennkammerbrummen erlaubt auf allgemeingültige und zielgerichtete Art und Weise eine Identifikation von wichtigen mit dem Problem des Brennkammerbrummens [2] im Zusammenhang stehenden Einflussgrößen.

Zusätzlich erlaubt das Modell Brennkammerbrummen die Auswertung eines Effekts von gezielten Änderungen dieser Einflussgrößen.

Dadurch können ohne Eingriff in das durch das Modell modellierte reale System bzw. in die Turbine Gegenmaßnahmen entwickelt werden, die wirkungsvoll Turbinenbrummen verringern und nicht eine Reduzierung der Last und Stromleistung beinhalten.

Ausgehend von obigen Variablen bzw. dem Trainingsdatensatz werden solche Modellzustandsvektoren, für welche die Turbine das Brummen zeigte, ausgewählt und zu einem weiteren, im Fall 2 verwendeten, zweiten Trainingsdatensatz zusammengefasst.

Unter Verwendung dieses zweiten Trainingsdatensatzes wird ein neuronales Netz vom Typ Feedforward für eine zukünftige Amplitude des Brennkammerbrummens (oder einer anderen, dem Brummen entsprechenden Kenngröße) gebildet bzw. trainiert.

Targetgrößen bei dem Training sind ein Brummen und eine Nox-Emission.

Durch ein sogenanntes Pruning [6] von Modellparametern, in diesem Fall von den Gewichten des neuronalen Netzes, wird der Einfluss jeder Variablen für das Modell Brennkammerbrummen bewertet. Aus der Bewertung wird auf die Wichtigkeit der jeweiligen Variable für das Modell geschlossen.

Sortiert man die Variablen entsprechend dieser Wichtigkeit, erhält man entsprechend auch die Reihenfolge der Wichtigkeit der Variablen für das Auftreten des Turbinenbrummens selbst.

Mit dem Pruning der Modellparametern wird das neuronale Netz zu einer hohen Generalisierungsfähigkeit auf Brummzeiträume gebracht, die nicht in dem Trainingsdatensatz enthalten waren.

Im folgenden werden Weiterführungen und Alternativen zu dem Ausführungsbeispiel beschrieben.

1) Fall 3: Modell Brennkammerbrummen in Kombination mit Modell Brennkammer

Das Modell Brennkammerbrummen nach Fall 2 beschreibt die Turbine unter einer momentanen Betriebs-Policy. Dies kann aber nicht ausreichend sein, um vorherzusagen, was der Effekt von Veränderungen dieser Betriebs-Policy ist bzw. welche Veränderungen vorgenommen werden können, um das Turbinenbrummen zu verhindern.

Dies kann darauf zurückgeführt werden, dass das Modell Brennkammerbrummen basierend auf dem neuronalen Netz vom Typ Feedforward eine Ursache-Wirkungs-Richtung von Zusammenhängen nicht beinhaltet und nicht zwischen direkten und indirekten Abhängigkeiten unterscheidet.

Deshalb wird in Fall 3 in einem ersten Schritt eine Modellierung des Brennkammerbrummens gemäß Fall 2 vorgenommen und dadurch die wichtigsten Variablen bzw. Einflussgrößen auf das Turbinenbrummen identifiziert.

Mit den identifizierten, wichtigsten Einflussgrößen wird ein zweiter Schritt durchgeführt, bei dem die Abhängigkeiten zwischen den wichtigsten im ersten Schritt identifizierten Einflussgrößen untereinander und in Bezug auf das Auftreten von Brummen modelliert werden.

Ziel dieser Modellierung ist die Identifikation von Ursache-Wirkungs-Zusammenhängen oder direkten und indirekten Abhängigkeiten bzw. direkten und indirekten Einflussgrößen.

Die Interpretation dieser Abhängigkeiten ermöglicht dann die optimale Identifikation von Einflussgrößen, insbesondere der direkten Einflussgrößen, durch deren Veränderung einem Brummen unmittelbar entgegengesteuert werden kann.

Dazu wird nun in dem zweiten Schritt eine Modellierung gemäß Fall 1 durchgeführt, d.h. mit einem Trainingsdatensatz umfassend nur mehr die gemäß Schritt 1 identifizierten wichtigsten Einflussgrößen wird ein kausales Netz trainiert (**Fig.12**).

Die nach dem Training vorliegende Netzstruktur 1200 offenbart die gesuchten direkten und indirekten Abhängigkeiten bzw. direkten und indirekten Einflussgrößen.

Anzumerken ist, dass beim zweiten Schritt auch Verfahren basierend auf der Theorie graphischer Modelle angewendet werden können.

2) Fall 4

In Weiterführung des Falls 3 kann nun ausgehend von den gemäß Fall 3 identifizierten direkten Einflussgrößen eine Modellierung gemäß Fall 2, d.h. eine Modellierung unter Verwendung eines neuronalen Netzes vom Typ Feedforward, vorgenommen werden.

Mittels des derart erzeugten neuronalen Netzes können Effekte von Änderungen der gemäß Fall 3 identifizierten direkten Einflussgrößen ermittelt werden.

Dadurch können ohne Experimente an der Turbine oder vor deren Einleitung die Wirkungen von Gegenmaßnahmen gegen ein Brummen abgeschätzt werden.

Die wirksamen Gegenmaßnahmen oder Kombinationen daraus werden identifiziert, evaluiert und vorbereitet.

3) In einer Alternative (vgl. Fig.9 und Fig.10) zu Fall 1 des Ausführungsbeispiels wird eine vereinfachte Netzwerkstruktur 1000 (685'), welche keine unsicheren Verbindungen aufweist, bestimmt .

In diesem Fall werden nur die direkten statistischen Unabhängigkeiten bzw. direkten statistischen Abhängigkeiten jeweils zwischen zwei Variablen des Systems ermittelt (vgl. 620, statistische Unabhängigkeit bzw. Abhängigkeit 0. Ordnung).

Nicht mehr ermittelt werden hier die bedingten statistischen Abhängigkeiten bzw. Unabhängigkeiten (vgl. 640, statistische Unabhängigkeit bzw. Abhängigkeit 1. Ordnung).

Es werden somit nur die beschriebenen Verfahrenschritte 601, 610, 620 und 630 durchführt, was zu der vereinfachten Netzstruktur 685' bzw. 1000 führt.

In Fig.10 ist die Endstruktur des Netzwerks 800', welches das System "Brennkammer" beschreibt, dargestellt.

Als Knoten 810 bis 824 sind wie in Fig.8 die Variablen:

- GtLsg 810
- SaugT 811
- UmgPr 812
- PrDFi 813
- VerdPr u.s.w.
- VerdT
- Schaufel
- DrVBr
- PilotG
- GasDr
- GasT
- Drehz
- AbgasT
- WD01
- WD02

dargestellt.

Die Endstruktur bzw. das Netzwerk 800' weist:

- feste Verbindungen 830, welche jeweils zwei Knoten 850 ohne eine zugehörige Bedingung verbinden.

Nicht aufgetreten ist bei dem Netzwerk 800'

- ein Knoten, welche mit keinem anderen Knoten verbunden ist.

Auch nicht treten mehr auf unsichere Verbindungen 840, welche jeweils zwei Knoten 860 unter einer Bedingung verbinden

2) In einer zweiten Alternative zu Fall 1 des Ausführungsbeispiels erfolgt die Ermittlung von zur Entfernung geeigneter Verbindungen bzw. von zur Entfernung geeigneter Gewichte eines neuronalen Netzes durch ein sogenanntes Pruning-Verfahren.

In diesem Dokument sind folgende Schriften zitiert:

[1] S. M. Candel, Combustion Instability Coupled by Pressure Waves and their Active Control, Invited General Lecture, 25. Int. Symp. On Combustion, Sydney, 1992;

[2] J. Hermann, et al., Aktive Instabilitätskontrolle an einer 170 MW Gasturbine, VDI-Bericht Nr. 1313, 18. Deutsch-Niederländischer Flammentag, TU Delft/NL, 28.-29. August 1997;

[3] Deutsche Patentanmeldung mit der Offenlegungsnummer DE 10134093 A1;

[4] F. W. Jensen, F. V. (1996), An introduction to Bayesian networks, UCL Press, London; 178 pages;

[5] $\chi^2$-Test;

[6] Internationale Patentanmeldung mit der Offenlegungsnummer WO97/36248;

[7] D. L. Eakle et al., Optimizing Combustion to Reduce NOx and Improve Boiler Efficiency Using Constrained Empirical Optimization based on Bayesian Models, Proceedings of the 1998 Spring Technical Conference of the ASME Internal Combustion Engine Division, Part 1 (of 3); Fort Lauderdale, FL, USA Apr 26-29 1998, VOL 30, NR1; Seite 87-92.

**Patentansprüche**

1. Verfahren zur Analyse von Einflussgrößen auf einen Brennvorgang in einer Brennkammer,
   **dadurch gekennzeichnet, dass**

   - die Analyse der Einflussgrößen unter Verwendung eines trainierbaren, statistischen Modells erfolgt,
   - das trainierbare, statistische Modell mindestens unter Verwendung von vorgegebenen Werten der Einflussgrößen trainiert wird, wobei Gewichte des trainierbaren, statistischen Modells verändert werden derart, dass das trainierte, statistische Modell den Brennvorgang beschreibt,
   - ein Pruning der Gewichte durchgeführt wird, und
   - unter Verwendung der veränderten Gewichte ein Einfluss der Einflussgrößen auf den Brennvorgang analysiert wird.

2. Verfahren nach einem der vorangehenden Ansprüche,

   - bei dem die Einflussgrößen mindestens einige der folgenden Größen und/oder davon abgeleitete Größen umfassen:

     - einen Luftdruck außen, einen Gasdruck, einen Druck nach einer Kompression, eine Druckdifferenz an einem Luftfilter, ein Pilotgas, eine Last, eine Lufttemperatur, eine Gastemperatur, eine Temperatur nach einer Kompression, eine Druckreduktion in einer Brennkammer, eine "blade" (Schaufel-)Position, eine Gasturbinenleistung, eine Ansaugtemperatur, einen Umgebungsluftdruck, einen Druckverlust über einen Ansaugfilter, einen Verdichterenddruck, eine Verdichterendtemperatur, Vorleitschaufelstellung, einen Druckverlust in einer Brennkammer, einen Pilotgashub, einen Gasdruck, eine Gastemperatur, eine Drehzahl, eine Abgastemperatur.

3. Verfahren nach einem der vorangehenden Ansprüche,

- bei dem der Brennvorgang unter Verwendung einer ein Brennkammerbrummen beschreibenden Größe beschrieben wird, wobei die Einflussgrößen auf die das Brennkammerbrummen beschreibende Größe abgebildet werden.

4. Verfahren nach dem vorangehenden Anspruch,

- bei dem der Brennvorgang unter Verwendung einer eine Nox-Emission beschreibenden Größe beschrieben wird, wobei die Einflussgrößen auf die die Nox-Emission beschreibende Größe abgebildet werden.

5. Verfahren nach dem vorangehenden Anspruch,

- bei dem die das Brennkammerbrummen beschreibende Größe eine Targetgröße bei dem Training ist.

6. Verfahren nach dem vorangehenden Anspruch,

- bei dem die die Nox-Emission beschreibende Größe die Targetgröße bei dem Training ist.

7. Verfahren nach einem der vorangehenden Ansprüche,

- bei dem bei dem das trainierbare, statistische Modell ein neuronales Netz, insbesondere ein Feedforward neuronales Netz, oder ein kausales Netz oder ein Entscheidungsbaum ist.

8. Verfahren nach einem der vorangehenden Ansprüche,

- bei dem die Brennkammer eine Brennkammer einer Turbine, insbesondere einer Gasturbine, ist.

9. Verfahren nach einem der vorangehenden Ansprüche,

- eingesetzt im Rahmen einer Sensitivitätsanalyse für Einflussgrößen eines Brennvorgangs einer Brennkammer.

10. Verfahren nach einem der vorangehenden Ansprüche,

- eingesetzt zu einer Ermittlung einer Reihenfolge einer Wichtigkeit von Einflussgrößen auf ein Brennkammerbrummen einer Brennkammer.

11. Verfahren nach einem der vorangehenden Ansprüche,

- eingesetzt zu einer Ermittlung einer Reihenfolge einer Wichtigkeit von Einflussgrößen auf eine Nox-Emission einer Brennkammer.

12. Computerprogramm mit Programmcode-Mitteln, um alle Schritte gemäß Anspruch 1 durchzuführen, wenn das Programm auf einem Computer ausgeführt wird.

13. Computerprogramm mit Prögrammcode-Mitteln gemäß dem vorangehenden Anspruch, welche Programmcode-Mitteln auf einem computerlesbaren Datenträger gespeichert sind.

14. Computerprogramm-Produkt mit auf einem maschinenlesbaren Träger gespeicherten Programmcode-Mitteln, um alle Schritte gemäß Anspruch 1 durchzuführen, wenn das Programm auf einem Computer ausgeführt wird.

**Claims**

1. Method for analysing variables influencing a combustion process in a combustion chamber, **characterised in that**

- the analysis of the influencing variables takes place using a trainable, statistical model,
- the trainable, statistical model is trained at least by using predetermined values of the influencing variables, whereby weights of the trainable statistical model are altered such that the trained, statistical model describes the combustion process,
- pruning of the weights is carried out, and
- by using the altered weights the influence of the variables on the combustion process is analysed.

2.  Method according to any one of the preceding claims,

- wherein the influencing variables comprise at least several of the following variables and/or variables deduced therefrom:

- external air pressure, gas pressure, pressure after compression, pressure difference at air filter, pilot gas, load, air temperature, gas temperature, temperature after compression, pressure reduction in a combustion chamber, 'blade' position, gas turbine output, air temperature inflow, air pressure, pressure difference over inlet filter, pressure after compression stage, temperature after compression stage, inlet guide blade position, pressure difference in combustion chamber, pilot gas stream, gas pressure, gas temperature, rotational speed, exhaust gas temperature.

3.  Method according to any one of the preceding claims,

- wherein the combustion process is described by using a variable describing combustion chamber humming, whereby the variables influencing the variable describing the combustion chamber humming are graphically represented.

4.  Method according to the preceding claim,

- wherein the combustion process is described by using a variable describing NOx emission, whereby the variables influencing the variable describing the NOx emission are graphically represented.

5.  Method according to the preceding claim,

- wherein the variable describing the combustion chamber humming is a target variable during training.

6.  Method according to the preceding claim,

- wherein the variable describing the NOx emission is the target variable during training.

7.  Method according to any one of the preceding claims,

- wherein the trainable statistical model is a neural network, in particular a feedforward neural network, or a causal network or a decision tree.

8.  Method according to any one of the preceding claims,

- wherein the combustion chamber is a combustion chamber of a turbine, in particular a gas turbine.

9.  Method according to any one of the preceding claims,

- used within the context of a sensitivity analysis for influencing variables of a combustion process of a combustion chamber.

10. Method according to any one of the preceding claims,

- used for determining a sequence of significance of variables influencing a combustion chamber humming of a combustion chamber.

11. Method according to any one of the preceding claims,

- used for determining a sequence of significance of variables influencing NOx emission of a combustion chamber.

12. Computer program with program code means, in order to carry out all steps according to claim 1, if the program is run on a computer.

13. Computer program with program code means according to the preceding claim, which program code means are stored on a computer readable data carrier.

14. Computer program product with program code means stored on a machine readable carrier, in order to carry out all steps according to claim 1, when the program is run on a computer.

**Revendications**

1. Procédé d'analyse de grandeurs d'influence influant sur un processus de combustion dans une chambre de combustion, **caractérisé en ce que**

   - l'analyse des grandeurs d'influence s'effectue au moyen d'un modèle statistique entraînable,
   - le modèle statistique entraînable est entraîné au moins au moyen de valeurs prédéfinies des grandeurs d'influence tout en modifiant des poids du modèle statistique entraînable de manière que le modèle statistique entraînable décrive le processus de combustion,
   - un élagage des poids est effectué, et
   - une influence des grandeurs d'influence sur le processus de combustion est analysée au moyen des poids modifiés.

2. Procédé selon l'une des revendications précédentes,

   - dans lequel les grandeurs d'influence comprennent au moins certaines des grandeurs suivantes et/ou des grandeurs dérivées de celles-ci:

     - une pression de l'air à l'extérieur, une pression de gaz, une pression après une compression, une différence de pression sur un filtre à air, un gaz pilote, une charge, une température de l'air, une température de gaz, une température après une compression, une réduction de pression dans une chambre de combustion, une position de l'aubage, un rendement de la turbine à gaz, une température d'aspiration, une pression de l'air ambiant, une perte de pression à travers un filtre d'aspiration, une pression finale du compresseur, une température finale du compresseur, une position de l'aubage de prérotation, une perte de pression dans une chambre de combustion, une augmentation du débit de gaz pilote, une pression de gaz, une température de gaz, une vitesse de rotation, une température de gaz d'échappement.

3. Procédé selon l'une des revendications précédentes,

   - dans lequel le processus de combustion est décrit au moyen d'une grandeur décrivant un ronronnement de la chambre de combustion, les grandeurs influant sur la grandeur décrivant le ronronnement de la chambre de combustion étant représentées.

4. Procédé selon la revendication précédente,

   - dans lequel le processus de combustion est décrit au moyen d'une grandeur décrivant une émission de NOx, les grandeurs influant sur la grandeur décrivant l'émission de NOx étant représentées.

5. Procédé selon la revendication précédente,

   - dans lequel la grandeur décrivant le ronronnement de la chambre de combustion est une grandeur cible lors de l'entraînement.

6. Procédé selon la revendication précédente,

   - dans lequel la grandeur décrivant l'émission de NOx est une grandeur cible lors de l'entraînement.

7. Procédé selon l'une des revendications précédentes,

- dans lequel le modèle statistique entraînable est un réseau neuronal, en particulier un réseau neuronal à propagation avant, ou un réseau causal ou un arbre de décision.

8. Procédé selon l'une des revendications précédentes,

- dans lequel la chambre de combustion est une chambre de combustion d'une turbine, en particulier d'une turbine à gaz.

9. Procédé selon l'une des revendications précédentes,

- utilisé dans le cadre d'une analyse de sensitivité pour des grandeurs d'influence d'un processus de combustion d'une chambre de combustion.

10. Procédé selon l'une des revendications précédentes,

- utilisé pour déterminer un ordre d'importance de grandeurs influant sur un ronronnement d'une chambre de combustion.

11. Procédé selon l'une des revendications précédentes,

- utilisé pour déterminer un ordre d'importance de grandeurs influant sur une émission NOx d'une chambre de combustion.

12. Programme informatique comprenant des moyens de code de programme afin d'effectuer toutes les étapes selon la revendication 1 lorsque le programme est exécuté sur un ordinateur.

13. Programme informatique comprenant des moyens de code de programme selon la revendication précédente, lesquels moyens de code de programme sont stockés sur un support de données lisible par ordinateur.

14. Progiciel informatique comprenant des moyens de code de programme stockés sur un support lisible par machine afin d'effectuer toutes les étapes selon la revendication 1 lorsque le programme est exécuté sur un ordinateur.

FIG 1

100

# FIG 2

201

200

Inputnumbers of the variables

U Ù Ü U Ù Ü U Ù Ü U Ù Ü U Ù Ü U Ù Ü U Ù Ü U Ù Ü U Ù Ü U Ù Ü U Ù Ü U Ù Ü U Ù Ü Ü

| GtLsg | 0 | 15 | 30 | 45 | 60 | 75 | 90 | 105 | 120 | 135 | 150 | 165 | 180 | 195 | 210 | 225 | 240 | 255 | 270 | 285 | 300 | 315 | 330 | 345 | 360 | 375 | 390 | 405 | 420 | 435 | 450 | 465 | 480 | 495 | 510 | 525 | 540 | 555 | 570 | 585 |
|---|---|---|---|---|---|---|---|---|---|---|---|---|---|---|---|---|---|---|---|---|---|---|---|---|---|---|---|---|---|---|---|---|---|---|---|---|---|---|---|---|
| SaugT | 1 | 16 | 31 | 46 | 61 | 76 | 91 | 106 | 121 | 136 | 151 | 166 | 181 | 196 | 211 | 226 | 241 | 256 | 271 | 286 | 301 | 316 | 331 | 346 | 361 | 376 | 391 | 406 | 421 | 436 | 451 | 466 | 481 | 496 | 511 | 526 | 541 | 556 | 571 | 586 |
| UmgPr | 2 | 17 | 32 | 47 | 62 | 77 | 92 | 107 | 122 | 137 | 152 | 167 | 182 | 197 | 212 | 227 | 242 | 257 | 272 | 287 | 302 | 317 | 332 | 347 | 362 | 377 | 392 | 407 | 422 | 437 | 452 | 467 | 482 | 497 | 512 | 527 | 542 | 557 | 572 | 587 |
| PrDFi | 3 | 18 | 33 | 48 | 63 | 78 | 93 | 108 | 123 | 138 | 153 | 168 | 183 | 198 | 213 | 228 | 243 | 258 | 273 | 288 | 303 | 318 | 333 | 348 | 363 | 378 | 393 | 408 | 423 | 438 | 453 | 468 | 483 | 498 | 513 | 528 | 543 | 558 | 573 | 588 |
| VerdPr | 4 | 19 | 34 | 49 | 64 | 79 | 94 | 109 | 124 | 139 | 154 | 169 | 184 | 199 | 214 | 229 | 244 | 259 | 274 | 289 | 304 | 389 | 334 | 349 | 364 | 379 | 394 | 409 | 424 | 439 | 454 | 469 | 484 | 499 | 514 | 529 | 544 | 559 | 574 | 589 |
| VerdT | 5 | 20 | 35 | 50 | 65 | 80 | 95 | 110 | 125 | 140 | 155 | 170 | 185 | 200 | 215 | 230 | 245 | 260 | 275 | 290 | 305 | 320 | 335 | 350 | 365 | 380 | 395 | 410 | 425 | 440 | 455 | 470 | 485 | 500 | 515 | 530 | 545 | 560 | 575 | 590 |
| Schaufel | 6 | 21 | 36 | 51 | 66 | 81 | 96 | 111 | 126 | 141 | 156 | 171 | 186 | 201 | 216 | 231 | 246 | 261 | 276 | 291 | 306 | 321 | 336 | 351 | 366 | 381 | 396 | 411 | 426 | 441 | 456 | 471 | 486 | 501 | 516 | 531 | 546 | 561 | 576 | 591 |
| DrVBr | 7 | 22 | 37 | 52 | 67 | 82 | 97 | 112 | 127 | 142 | 157 | 172 | 187 | 202 | 217 | 232 | 247 | 262 | 277 | 292 | 307 | 322 | 337 | 352 | 367 | 382 | 397 | 412 | 427 | 442 | 457 | 472 | 487 | 502 | 517 | 532 | 547 | 562 | 577 | 592 |
| PilotG | 8 | 23 | 38 | 53 | 68 | 83 | 98 | 113 | 128 | 143 | 158 | 173 | 188 | 203 | 218 | 233 | 248 | 263 | 278 | 293 | 308 | 323 | 338 | 353 | 368 | 383 | 398 | 413 | 428 | 443 | 458 | 473 | 488 | 503 | 518 | 533 | 548 | 563 | 578 | 593 |
| GasDr | 9 | 24 | 39 | 54 | 69 | 84 | 99 | 114 | 129 | 144 | 159 | 174 | 189 | 204 | 219 | 234 | 249 | 264 | 279 | 294 | 309 | 324 | 339 | 354 | 369 | 384 | 399 | 114 | 429 | 444 | 459 | 474 | 489 | 504 | 519 | 534 | 549 | 564 | 579 | 594 |
| GasT | 10 | 25 | 40 | 55 | 70 | 85 | 100 | 115 | 130 | 145 | 160 | 175 | 190 | 205 | 220 | 235 | 250 | 265 | 280 | 295 | 310 | 325 | 340 | 355 | 370 | 385 | 400 | 415 | 430 | 445 | 460 | 475 | 490 | 505 | 520 | 535 | 550 | 565 | 580 | 595 |
| Drehz | 11 | 26 | 41 | 56 | 71 | 86 | 101 | 116 | 131 | 146 | 161 | 176 | 191 | 206 | 221 | 236 | 251 | 266 | 281 | 296 | 311 | 326 | 341 | 356 | 371 | 386 | 401 | 416 | 431 | 446 | 461 | 476 | 491 | 506 | 521 | 536 | 551 | 566 | 581 | 596 |
| AbgasT | 12 | 27 | 42 | 57 | 72 | 87 | 102 | 117 | 132 | 147 | 162 | 177 | 192 | 207 | 222 | 237 | 252 | 267 | 282 | 297 | 312 | 327 | 342 | 357 | 372 | 387 | 402 | 417 | 432 | 447 | 462 | 477 | 492 | 507 | 522 | 537 | 552 | 567 | 582 | 597 |
| WD01 | 13 | 28 | 43 | 58 | 73 | 88 | 103 | 118 | 133 | 148 | 163 | 178 | 193 | 208 | 223 | 238 | 253 | 268 | 283 | 298 | 313 | 328 | 343 | 358 | 373 | 388 | 403 | 418 | 433 | 448 | 463 | 478 | 493 | 508 | 523 | 538 | 553 | 568 | 583 | 598 |
| WD02 | 14 | 29 | 44 | 59 | 74 | 89 | 104 | 119 | 134 | 149 | 164 | 179 | 194 | 209 | 224 | 239 | 254 | 269 | 284 | 299 | 314 | 329 | 344 | 359 | 374 | 389 | 404 | 419 | 434 | 449 | 464 | 479 | 494 | 509 | 524 | 539 | 554 | 569 | 584 | 599 |

203

202

EP 1 668 431 B1

19

## FIG 3

## FIG 4

| | |
|---|---|
| Statistische Abhängigkeit/ Unabhängigkeit 0. Ordnung | 410 |
| Entfernen von Verbindungen mit statistischer Unabhängigkeit | 420 |
| Statistische Abhängigkeit/ Unabhängigkeit 1. Ordnung | 430 |
| Entfernen von Verbindungen mit bedingter statistischer Unabhängigkeit | 440 |

400

## FIG 5

# FIG 6

600

| Initialisierung, Definition der Variablen, Anfangsstruktur des Netwerks | — 601 |

↓

| Bildung eines Trainingsdatensatzes | — 610 |

↓

| Ermittlung der statistischen Unabhängigkeit / Abhängigkeit 0. Ordnung | — 620 |

↓

| Entfernung Verbindungen statistischer Unabhängigkeit 0. Ordnung | — 630 |

↓

| Ermittlung der statistischen Unabhängigkeit / Abhängigkeit 1. Ordnung | — 640 |

↓

| Aufstellen von Entfernungsregeln für Verbindungen mit einer statistischen Unabhängigkeit 1. Ordnung | — 650 |

↓

| Ermittlung von Interferenzen zwischen den Regeln, Ermittlung vereinfachter Regeln | — 660 |

↓

| Bildung von Bedingungen für das Entfernen von Verbindungen | — 670 |

↓

| bedingtes Entfernen von "unsicheren" Verbindungen | — 680 |

↓

( Modell ) — 685

↓

| Analyse des Systems | — 690 |

Bestimmung des Modells

# FIG 7

| Tests: | Regeln: | Regeln nach Vereinbarung: | Identifikation von Regionen: |
|---|---|---|---|

710 {
A(A,B)
A(A,C)
A(A,D)
U(A,E)   entferne (A,E)   entferne (A,E)   entferne (A,E)
A(B,C)
A(B,D)
A(B,E)
U(C,D)   entferne (C,D)   entferne (C,D)   entferne (C,D)
U(C,E)   entferne (C,E)   entferne (C,E)   entferne (C,E)
A(D,E)
}

712

711 {
U(A,C|B) entferne (A,C) wenn (A,B) und (B,C)   entferne (A,C) wenn (B,C)   entferne (A,C) wenn (B,C)
U(A,D|B) entferne (A,D) wenn (A,B) und (B,D)   entferne (A,D)   entferne (A,D)
U(B,C|A) entferne (B,C) wenn (A,B) und (A,C)   entferne (B,C) wenn (A,C)   entferne (B,C) wenn (A,C)   } 713
U(B,E|D) entferne (B,E) wenn (B,D) und (D,E)   entferne (B,E) wenn (D,E)   entferne (B,E) wenn (D,E)
U(D,E|B) entferne (D,E) wenn (B,D) und (B,E)   entferne (D,E) wenn (B,E)   entferne (D,E) wenn (B,E)
}

Resultierender Graph

714   A — 701

703 — C

700

714   B — 702

705 — E

D — 704

EP 1 668 431 B1

FIG 8

Result on Data of the Tapada Plant

EP 1 668 431 B1

# FIG 9

600

```
┌─────────────────────────────────────┐
│ Initialisierung, Definition der Variablen, │  ─ 601
│      Anfangsstruktur des Netwerks      │
└─────────────────────────────────────┘
                    │
                    ▼
┌─────────────────────────────────────┐
│   Bildung eines Trainingsdatensatzes   │  ─ 610
└─────────────────────────────────────┘
                    │
                    ▼
┌─────────────────────────────────────┐
│      Ermittlung der statistischen      │  ─ 620
│ Unabhängigkeit / Abhängigkeit 0. Ordnung │
└─────────────────────────────────────┘
                    │
                    ▼
┌─────────────────────────────────────┐
│ Entfernung Verbindungen statistischer  │  ─ 630
│      Unabhängigkeit 0. Ordnung        │
└─────────────────────────────────────┘
                    │
                    ▼
              ( Modell )  ─ 685'
                    │
                    ▼
┌─────────────────────────────────────┐
│          Analyse des Systems          │  ─ 690
└─────────────────────────────────────┘
```

# FIG 10

Result on Data of the Tapada Plant

EP 1 668 431 B1

# FIG 11

General Principle

neural soft sensor

EP 1 668 431 B1

humming peak warning

Inputs
examples

Targets

Speed

Humming

Inflow temp.

Load

Pilot Gas

NOX

In time modification of relevant variables

2000    6000    10000    14000
time

# FIG 12

2. Causal net detects dependancy structure of relevant variables

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10134093 A1

- WO 9736248 A

**In der Beschreibung aufgeführte Nicht-Patentliteratur**

- **S. M. Candel.** Combustion Instability Coupled by Pressure Waves and their Active Control, Invited General Lecture. *25. Int. Symp. On Combustion,* 1992
- **J. Hermann et al.** Aktive Instabilitätskontrolle an einer 170 MW Gasturbine. *VDI-Bericht Nr. 1313,* 1997, vol. 18, 28, 29

- **F. W. Jensen, F. V.** An introduction to Bayesian networks. UCL Press, 1996, 178
- **D. L. Eakle et al.** Optimizing Combustion to Reduce NOx and Improve Boiler Efficiency Using Constrained Empirical Optimization based on Bayesian Models. Spring Technical Conference of the ASME Internal Combustion Engine Division, 26. April 1998, vol. 30, 87-92